# EUROPEAN PATENT APPLICATION

(11) **EP 1 433 667 A2**
(43) Date of publication of application: **30.06.2004**
(21) Application number: 03024429.7
(22) Date of filing: 23.10.2003
(51) Int. Cl.: B60R 21/16

(54) **Airbag apparatus for side collision**

(30) Priority: 27.12.2002 JP 2002380190; 26.02.2003 JP 2003049537; 06.03.2003 JP 2003060107
(71) Applicant: TAKATA CORPORATION, Minato-ku, Tokyo 106-8510 (JP)
(72) Inventor: Kumagai, Masayoshi, Takata Corp., Tokyo 106-8510 (JP); Joujima, Kazuhiko, Takata Corp., Tokyo 106-8510 (JP); Tsujimoto, Kei, Takata Corp., Tokyo 106-8510 (JP)
(74) Representative: Banzer, Hans-Jörg, Dipl.-Ing.

(57) **Abstract**

In order to provide an airbag apparatus for side collision in which a gas pressure in a lower chamber (1a) can be maintained at a high level for a sufficiently long time, an airbag (1) is formed by making a sheet material such as cloth or resin sheet into a bag shape, and the interior thereof is divided by a seam (2) into the lower chamber (1a) on the lower side and an upper chamber (1b) on the upper side.

## Description

### [Technical Field of the Invention]

The present invention relates to an airbag apparatus for side collision for protecting occupants in a vehicle in case of side collision and also in case of rollovers and the like and, more specifically, to an airbag apparatus for side collision having an airbag of which the interior is divided into a plurality of chambers.

### [Description of the Related Art]

An airbag apparatus for side collision is, as is known, constructed in such a manner that an airbag is deployed on the side of an occupant by a gas generator, so that the body of the occupant is received by the deployed airbag.

In Japanese Unexamined Patent Application Publication No. 2000-177527, a construction in which the lower portion of the airbag to which the lumber region of the occupant abuts is deployed to have a higher internal pressure than the upper portion thereof is disclosed.

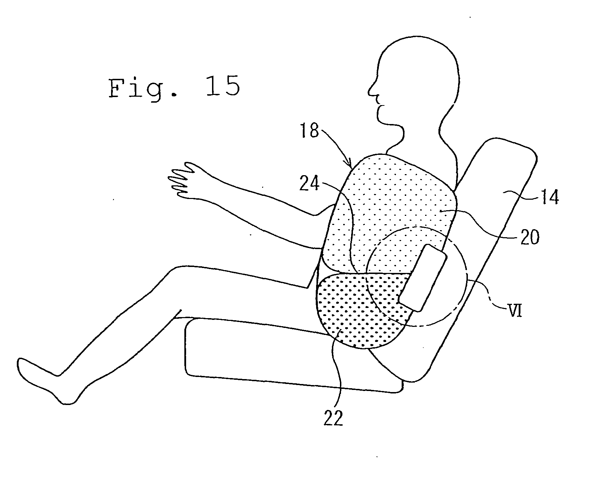

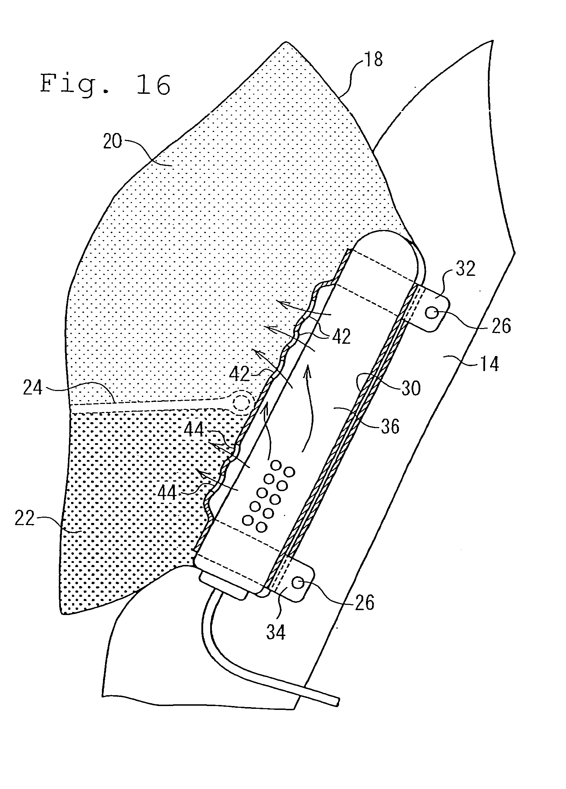

Fig. 15 is a side view of a seat having an airbag apparatus for side collision in the same patent publication, and Fig. 16 is an enlarged cross-sectional view of the portion indicated by VI in Fig. 15.

An airbag 18 is divided into an upper chamber 20 and a lower chamber 22 by a seam 24. The rear end of the seam 24 is located at some distance from the rear edge of the airbag 18, and a cylindrical tubular housing 30 is arranged at a gap between the rear end of the seam 24 and the rear edge of the airbag 18. A rod-shaped gas generator 36 is disposed in the tubular housing 30. The upper and the lower ends of the tubular housing 30 is provided with pipe clips 32, 34, and the gas generator 36 is fixed with the pipe clips 32, 34. The pipe clips 32, 34 seals between gas generator 36 and the tubular housing 30. The pipe clips 32, 34 are attached to mounting positions 26 on a seatback 14.

The tubular housing 30 is formed with an outlet port 42 for the upper chamber for allowing gas to flow from the gas generator 36 into the upper chamber 20 and an outlet port 44 for the lower chamber for allowing gas to flow into the lower chamber 22. The opening area of the outlet port 44 for the lower chamber is larger than the opening area of the outlet port 42 for the upper chamber. Therefore, when the gas generator 36 is activated, the airbag 18 is inflated to achieve the internal pressure of about 0.5 bar for the upper chamber 20 and the internal pressure of about 1.5 bar for the lower chamber 22.

### [Problems to be Solved by the Invention]

In the airbag apparatus for side collision disclosed in the above-described Japanese Unexamined Patent Application Publication No. 2000-177527, the tubular housing 30 is used. Therefore, when the occupant is received by the lower chamber 22 of the deployed airbag 18, gas in the lower chamber 22 flows through the tubular housing 30 which forms communicating means between the lower chamber 22 and the upper chamber 20 into the upper chamber 20, and hence the gas pressure in the lower chamber cannot be maintained at a high level for a long time.
Furthermore, because the rear end of the seam 24 and the rear edge of the gas distributor 30 have a slight space therebetween also forming communicating means between the lower chamber 22 and the upper chamber 20, gas leaks from the lower chamber 22 with the higher inner pressure to the upper chamber 20 with the lower inner pressure. This also lowers the gas pressure in the lower chamber 22 relatively quickly.

An object of the present invention is to provide an airbag apparatus for side collision in which such problems are overcome and thus the gas pressure in a lower chamber is maintained at a high level for a sufficiently long time.

### [Means for Solving the Problems]

This object is achieved by an airbag apparatus as defined by claim 1. The dependent claims define preferred or advantageous embodiments of the present invention.
An airbag apparatus for side collision according to the present invention includes an airbag including an occupant-side surface which faces an occupant when deployed, and a vehicle-body-side surface which is on the opposite side therefrom, and having an interior divided into a plurality of chambers including at least two chambers of an upper chamber and a lower chamber, a gas generator for deploying the airbag, and communicating means for communicating the upper chamber and the lower chamber, and is characterized in that gas flow preventing means, for example a check valve, for preventing gas from flowing from the lower chamber to the upper chamber are provided.

In the airbag apparatus for side collision according to the present invention, since gas is prevented from flowing from the lower chamber to the upper chamber by the gas flow preventing means, the pressure in the lower chamber is maintained at a high level for a long time. The airbag apparatus for side collision can protect the occupant not only in the case of side collision, but also in the case of overturn.

It is also possible to provide a vent unit for allowing gas to flow out from the upper chamber toward the outside of the airbag.

The present invention may also be such that the occupant-side surface and the vehicle-body-side surface are joined, the plurality of chambers are defined in the airbag by a linearly extending partitioning joint line, the communicating portion is formed in the airbag by part of the partitioning joint line being positioned away from one side edge of the airbag, and part of the gas flow preventing means are joined to the occupant-side surface and the vehicle-body-side surface by the partitioning joint line. In the airbag of this construction, mounting structure of the gas flow preventing means is simple and thus manufacturing thereof is easy.
The airbag apparatus may further comprise a gas distributor enclosing the gas generator and including outlet ports for allowing gas from the gas generator at least to the upper chamber and the lower chamber, wherein the outlet port for the lower chamber of the gas distributor is larger than the outlet port for the upper chamber thereof.

In this case, since the outlet port of the lower chamber is larger than the outlet port for the upper chamber, the lower chamber is deployed earlier than the upper chamber, and the internal pressure of the lower chamber is higher than the upper chamber. In addition, since gas is prevented from flowing from the lower chamber to the upper chamber by the gas flow preventing means which may again comprise the check valve, the pressure in the lower chamber is maintained at a high level for a long time. The airbag apparatus for side collision can protect the occupant not only in the case of side collision, but also in the case of overturn.

In the present invention, the gas distributor may include a sheet for wrapping the gas generator, and the outlet port for the lower chamber of the gas distributor extends toward the lower chamber side with respect to the gas generator. Therefore, it is also possible that the extended portion is adapted to constitute the check valve. In this construction, the check valve is constituted by the gas distributor, and thus a construction is simple and a manufacturing cost is low.

In this case, it is also possible to construct the gas distributor in such a manner that the sheet is rolled in a cylindrical shape, the one edge and the other edge of the sheet are superimposed, and a mounting member of the gas generator is passed through the superimposed edges. In this arrangement, the gas distributor can be constructed only by rolling the flat sheet into a cylindrical shape and passing the mounting member (for example a bolt) of the gas generator through the both edges, and thus manufacture of the gas distributor may be significantly simplified.

According to the present invention, preferably, a vent unit for allowing gas to flow from the upper chamber to the outside of the airbag is provided. An impact to the occupant crushing into the upper chamber is absorbed by gas flowing out from the upper chamber through the bent unit.

In the airbag device of the present invention, the interior may be separated into a plurality of chambers by at least one separating mechanism; the gas generator may be cylindrical and disposed in the airbag; and the gas distributor may also be cylindrical and disposed in the airbag, the gas distributor holding the gas generator therein and having outlets for introducing gas to the upper chamber and the lower chamber from the gas generator. Such an airbag may have a hole in the vicinity of the gas distributor. The periphery of the hole is sealed by a sealing mechanism in an airtight manner. The sealing mechanism is connected with at least one of the separating mechanism. The gas flow preventing means comprise a clamp member extending through the hole which is wrapped around the gas distributor on the exterior of the airbag to press the airbag against the periphery of the gas distributor.

In this airbag apparatus, the separating mechanism is connected with the sealing mechanism in the periphery of the hole, and the hole adjacent to the gas distributor is secured and pressed against the gas distributor by the clamp member. This eliminates a space that causes the problem in the conventional device so as to separate the upper chamber from the lower chamber in a highly airtight manner. Accordingly, the inner pressure of the lower chamber is maintained sufficiently high for a longer period of time.

The airbag apparatus of the present invention may preferably include at least one inner chamber between the upper chamber and the lower chamber. In such a case, gas may be directly supplied to the inner chamber from the gas distributor. This allows quicker inflation of the inner chamber of the airbag.

Furthermore, the gas may flow into the inner chamber via the upper chamber such that when the occupant comes into contact with the upper chamber, the gas gradually flows into the inner chamber from the upper chamber so as to absorb the impact from the occupant.

In the formation of the inner chamber, holes may preferably be provided along the gas distributor so that each of the holes is connected with the respective separating mechanism. In this case, a gas outlet for the inner chamber may be provided on the gas distributor between the separating mechanism. Thus, gas is directly supplied to the inner chamber from the gas distributor.
In another structure having the inner chamber, a plurality of the separating mechanism is connected with a common hole, and the inner chamber is provided between the separating mechanism. In this case, gas is introduced to the inner chamber via, for example, the upper chamber. This structure is advantageous for having fewer holes.

### [Brief Description of the Drawings]

Fig. 1 is a perspective view of a seat of an automotive vehicle provided with an airbag apparatus for side collision according to the present invention.
Fig. 2(a) is a cross-sectional view of an embodiment taken along the line II-II in Fig. 1, Fig. 2(b) is a cross-sectional view taken along the line B-B in Fig. 2(b), and Fig. 2(c) is a cross-sectional view taken along the line C-C in Fig. 2(a)
Fig. 3 is a perspective view of a check valve used in the airbag according to the embodiment.
Fig. 4 is a cross-sectional view of an airbag according to another embodiment.
Fig. 5 is a cross sectional view of another embodiment taken along the line II-II in Fig. 1, and Fig. 5(b) is a cross-sectional view taken along the line B-B in Fig. 5(a).
Fig. 6 is a cross sectional view taken along the line III-III in Fig. 5.
Fig. 7 is a perspective view of a gas distributor used for an airbag apparatus according to the embodiment of Fig. 5.
Fig. 8 is a perspective view of a gas generator and a holder of the airbag apparatus according to the embodiment of Fig. 5.
Fig. 9 is a cross sectional view taken along the line VI-VI in Fig. 8.
Fig. 10 is a cross-sectional view of a further embodiment showing a part corresponding to Fig. 6.
Fig. 11 includes Fig. 11(a) which is a perspective view of an automobile seat having a side airbag device of still another embodiment and Fig. 11(b) which is a lateral view of a side airbag.
Fig. 12 includes Fig. 12(a) which is a sectional view taken along line IIa-IIa of Fig. 11(b), and Fig. 12(b) which is a sectional view taken along line IIb-IIb of Fig. 11(b).
Fig. 13 is a lateral view of the side airbag according to yet another embodiment.
Fig. 14 is a lateral view of the side airbag according to a further embodiment.
Fig. 15 is a lateral view of a conventional side airbag apparatus.
Fig. 16 is a sectional view of the conventional side airbag apparatus of Fig. 15.

### [Description of the Embodiments]

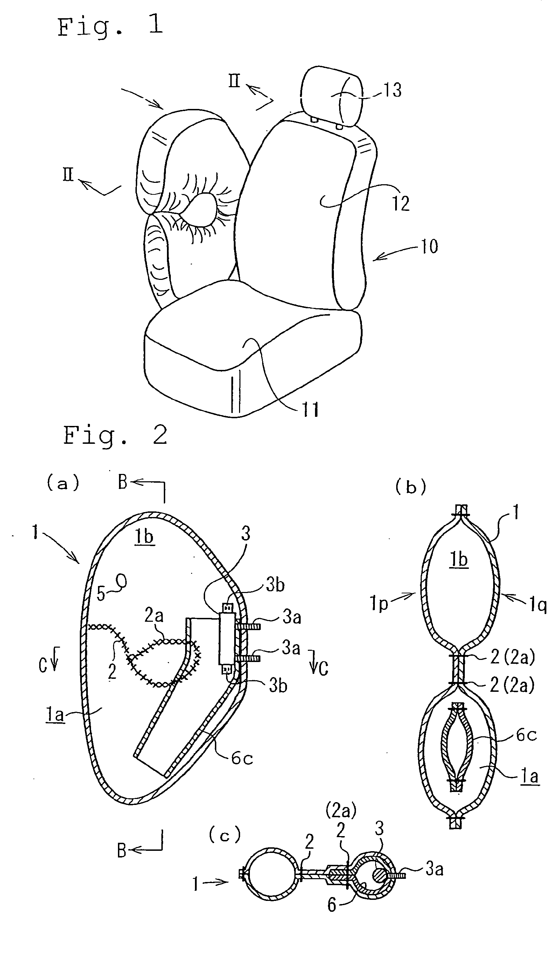

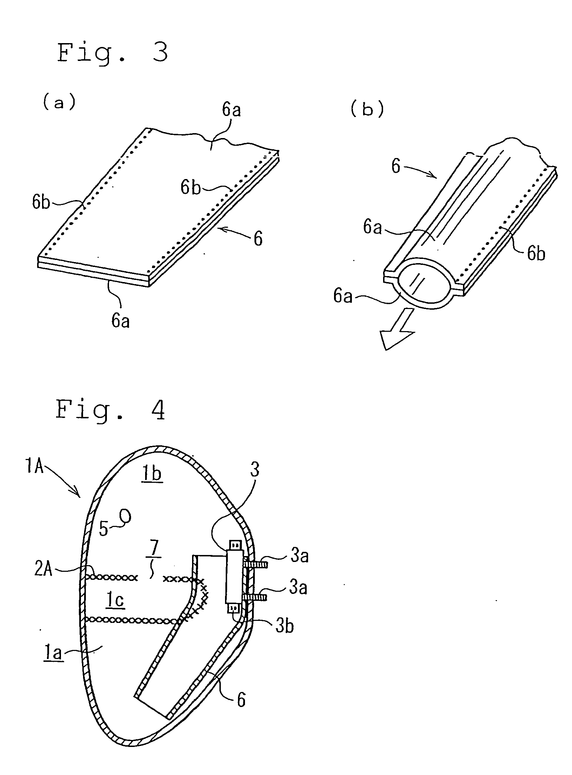

Referring now to the drawings, embodiments will be described. Fig. 1 is a perspective view of a seat of a vehicle provided with an airbag apparatus for side collision according to the present invention; Fig. 2 (a) is a cross-sectional view of an embodiment taken along the line II-II in Fig. 1; Figs. 2(b) and (c) are cross-sectional view taken along the line B-B and the line C-C in Fig. 2(a). Fig. 3 is a perspective view of a check valve.

As shown in Fig. 1, an airbag 1 is constructed to be deployed along the window side of a seat 10. The seat 10 is provided with a seat cushion 11, a seatback 12, and a headrest 13.

A case (not shown) of an airbag apparatus for side collision is mounted to the side of the seatback 12, the airbag 1 is folded and stored in the case, and is covered with a module cover (not shown).

The airbag 1 is formed into a bag shape by placing two sheet-shaped members such as cloth, resin sheet, or the like (cloth in this embodiment) one on top of another, and stitching the peripheral edges thereof together. The interior thereof is divided into a lower chamber 1a on the lower side and an upper chamber 1b on the upper side by a linear connected portion (seam in this embodiment) 2. The seam 2 connects the occupant-side surface 1p and the vehicle-body-side surface 1q on the opposite side therefrom of the airbag 1. The seam 2 is shaped substantially like a number 6 having a looped portion 2a.

As shown in Fig. 2(a), the rear end of the looped portion 2a of the seam 2 extends upward at some distance from the rear edge of the airbag 1, and a communicating portion communicating the upper chamber 1b and the lower chamber 1a is formed at the gap between the looped portion 2a and the rear edge of the airbag 1. The front edge of the seam 2 is continuing from the front edge of the airbag 1.

A check valve 6c is disposed at this communicating portion and a rod-shaped gas generator 3 is disposed therein. The gas generator 3 is disposed so that the longitudinal direction is oriented in the vertical direction. Though the gas generator 3 is provided with gas injecting sections 3b at the upper and the lower ends, the gas injecting section may be provided only at one end.

Two stud bolts 3a, 3a are projected from the gas generator 3. The stud bolts 3a, 3a are pierced through the check valve 6c and the rear edge of the airbag 1 and projects rearward from the airbag 1. The stud bolts 3a, 3a are secured to a case of the airbag apparatus for side collision with nuts. Accordingly the gas generator 3 and the airbag 1 are joined to the case.

As shown in Fig. 3, the check valve 6c is formed by placing two sheets 6a, 6a one on top of another, and stitching both sides with seams 6b. It is also possible to fold one sheet and stitch on one side.

The side of the check valve 6c on the front side of the airbag is stitched (together) with the occupant-side surface 1p and the vehicle-body-side surface 1q by the looped portion 2a of the seam 2. The side of the check valve 6c on the rear side of the airbag is stitched to the occupant-side surface 1p and the vehicle-body-side surface 1q by a seam for stitching the occupant-side surface 1p and the vehicle-body-side surface 1q together along the peripheral edge of the airbag 1.

Most part of the gas generator 3 is disposed in the check valve 6c, and only the upper end portion is projected upward from the check valve 6c, and exposed in the upper chamber 1b. When the gas generator 3 is not in operation, the sheets 6a, 6a of the check valve 6c are overlapped with each other as shown in Fig. 3(a).

When the gas generator 3 is activated and gas is injected, the check valve 6c is inflated into a substantially cylindrical shape as shown in Fig. 3(b), and gas is allowed to pass through the check valve 6c. In this case, the outer peripheral surface of the check valve 6c is brought into intimate contact with the occupant-side surface 1p and the vehicle-body-side surface 1q, so that gas is prevented from passing between the outer surface of the check valve 6c with respect to the occupant-side surface 1p and the vehicle-body-side surface 1q. The outer surface of the check valve 6c may be joined with the occupant-side surface 1p and the vehicle-body-side surface 1q by adhesion or stitching.

The upper chamber 1b is provided with a vent hole 5.

In the airbag apparatus for side collision thus constructed, when the vehicle encountered side collision or overturn, the gas generator 3 is activated and injects gas. The gas flows from the gas generator 3 to the lower chamber 1a and the upper chamber 1b respectively to deploy these chambers 1a and 1b. Accordingly, as shown in Fig. 1, the airbag 1 deploys along the window side of the seat 10.

In this airbag apparatus for side collision, since the upper chamber 1b is provided with the vent hole 5, when the occupant crushes the upper chamber 1b, gas in the upper chamber 1b flow out through the vent hole 5, and thus the impact of the crushing occupant is absorbed. Even when the body of the occupant crushes the lower chamber 1a, communication between the lower chamber 1a and the upper chamber 1b is blocked by the check valve 6c. Therefore, the gas pressure in the lower chamber 1a is held at a high level, and thus the lateral movement of the lumber region of the occupant is prevented for a long time.

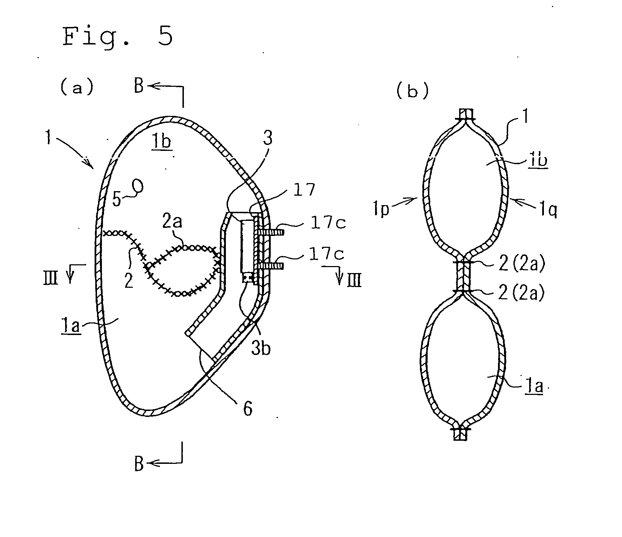

In the embodiment described above, although the interior of the airbag 1 is divided into two chambers; the upper chamber 1b and the lower chamber 1a, it may also be divided into three chambers or more. Fig. 4 is a cross-sectional view showing an airbag 1A provided with a substantially lateral U-shaped seam 2A in the airbag, and thus includes a middle chamber 1c between the upper chamber 1b and the lower chamber 1a.

The front edge of the seam 2A is joined to the front edge of the airbag 1A. The seam 2A is provided with an open section 7 for communicating the upper chamber 1b and the middle chamber 1c. Other constructions of the airbag 1A are the same as the airbag 1 shown in Figs. 1 to 3, and thus the reference numerals identical to Figs. 1 to 3 represent the identical parts, in Fig 4.

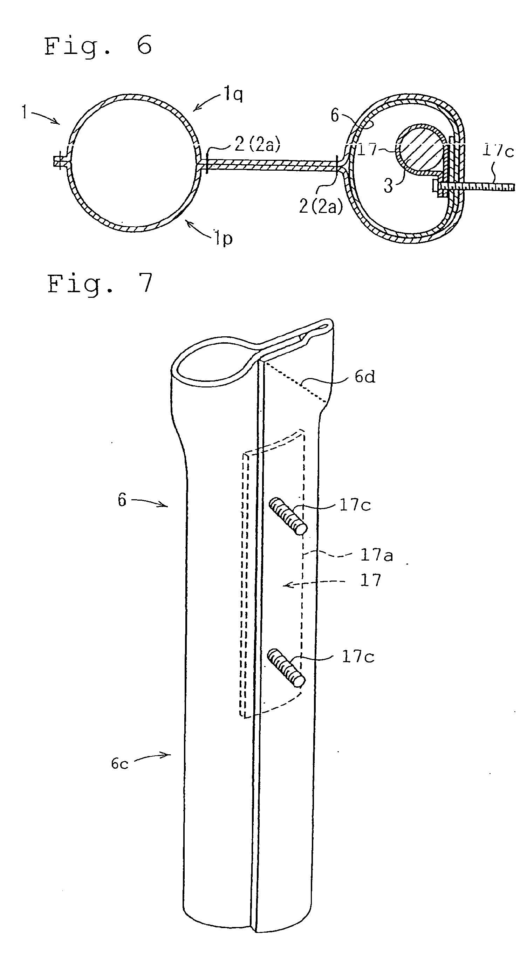

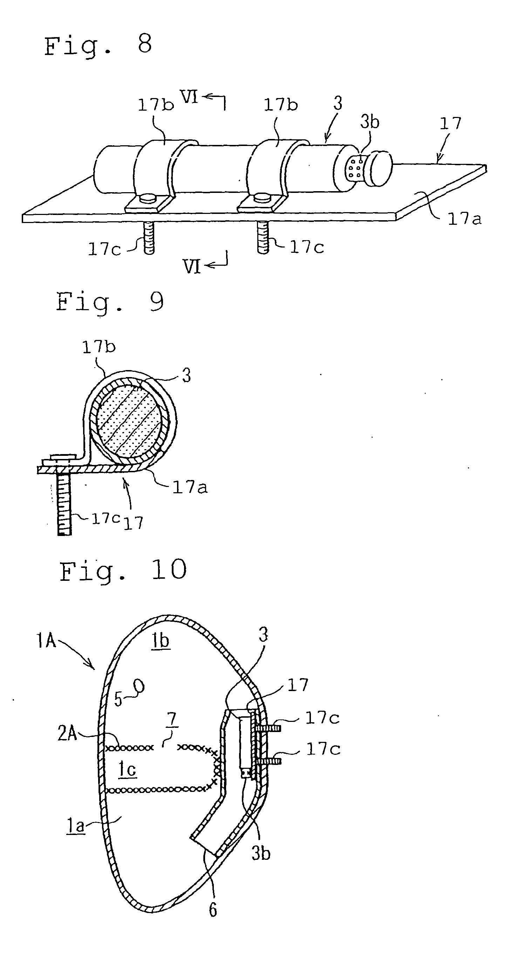

In the embodiment shown in Fig. 4, since the check valve 6c is provided, the gas pressure in the lower chamber 1a is maintained at a high level for a long time.
Referring now to Figures 5 to 9, a further embodiment will be described. Fig. 5(a) is a cross sectional view of the further embodiment taken along the line II-II in Fig. 1; Fig. 5(b) and Fig. 6 are cross-sectional views taken along the line B-B, and the line III-III of Fig. 5(a), respectively. Fig. 7 is a perspective view of a gas distributor; Fig. 8 is a perspective view of a gas generator and a holder thereof; and Fig. 9 is a cross-sectional view taken along the line VI-VI in Fig. 5.

Similar to the embodiment of Fig. 2, the airbag 1 shown in Fig. 5 is formed into a bag shape by placing two sheet-shaped members such as cloth, resin sheet, or the like (cloth in this embodiment) one on top of another, and stitching the peripheral edges thereof together. The interior thereof is divided into a lower chamber 1a on the lower side and an upper chamber 1b on the upper side by a linear connected portion (seam in this embodiment) 2. The seam 2 connects an occupant-side surface 1p and a vehicle-body-side surface 1q on the opposite side therefrom of the airbag 1. The seam 2 is shaped substantially like a number 6 having a looped portion 2a.

As shown in Fig. 2(a), the rear end of the looped portion 2a of the seam 2 extends upward at some distance from the rear edge of the airbag 1, and a communicating portion communicating the upper chamber 1b and the lower chamber 1a is formed at the portion between the looped portion 2a and the rear edge of the airbag 1. The front edge of the seam 2 is continuing from the front edge of the airbag 1.

A gas distributor 6 is disposed at this communicating portion and a rod-shaped gas generator 3 is disposed therein. The gas distributor 6 is formed by rolling a substantially square heat-resistant cloth into a cylindrical shape, superimposing one edge and the other edge thereof, and forming bolt insertion holes (or slits) at the superimposed portion. By inserting bolts 17c that will be described later into the bolt insertion hole, the cloth is maintained in a cylindrical shape. The cylindrical gas distributor 6 is disposed so that the axial direction of the cylinder is oriented in the vertical direction. The outlet port on the upper chamber side at the top of the gas distributor 6 is narrowed by a seam 6d. The outlet port of the lower chamber is larger than the outlet port of the upper chamber.

The gas generator 3 is disposed so that the longitudinal direction is oriented in the vertical direction. The gas generator 3 is provided with a gas injecting section 3b at the lower end thereof.

The gas generator 3 is held by an inflator holder (hereinafter referred to as a holder) 17. The holder 17 includes a main plate portion 17a in a plate shape and two band portions 17b in C-shape, and the bolts 17c are projected from the band portions 17b. The gas generator 3 is clamped between the main plate portion 17a and the band portions 17b. The bolts 17c are pierced through the main plate portion 17a and projects to the opposite side from the band portions 17b.

The bolts 17c are, as described above, pierced through the bolt insertion holes formed on the both edges of the cloth constituting the gas distributor 6 and the rear edge of the airbag 1 and projected rearward from the airbag 1. The bolts 17c are secured to the case of the airbag apparatus for side collision with nuts. Accordingly, the gas generator 3 and the airbag 1 are connected to the case.

The entire gas generator 3 is disposed in the gas distributor 6. The lower portion of the gas distributor 6 extends downward with respect to the lower end of the gas generator 3, and constitutes a check valve 6c.

When the gas generator 3 is activated and gas is injected, the gas distributor 6 is inflated into a substantially cylindrical shape as shown in Fig. 3(b), gas is distributed through the gas distributor 6 into the lower chamber 1a and the upper chamber 1b, and the airbag 1 is deployed. In this case, the outer peripheral surface of the gas distributor 6 is brought into intimate contact with the occupant-side surface 1p and the vehicle-body-side surface 1q, so that gas is prevented from passing between the outside the outer surface of the gas distributor 6 with respect to the occupant-side surface 1p and the vehicle-body-side surface 1q. The outer surface of the gas distributor 6 may be joined with the occupant-side surface 1p and the vehicle-body-side surface 1q by adhesion or stitching.

The upper chamber 1b is provided with a vent hole 5.

In the airbag apparatus for side collision thus constructed, when the vehicle encountered side collision or overturn, the gas generator 3 is activated and injects gas. The gas flows from the gas generator 3 to the lower chamber 1a and the upper chamber 1b respectively to deploy these chambers 1a and 1b. Accordingly, as shown in Fig. 1, the airbag 1 deploys along the window side of the seat 10. Since the outlet port for the lower chamber of the gas distributor 6 is larger than the outlet port for the upper chamber thereof, and the gas injection port of the gas generator 3 is disposed at the lower portion of the gas distributor 6, the lower chamber 1a deploys earlier and to a higher internal pressure in comparison with the upper chamber 1b.

In this airbag apparatus for side collision, since the upper chamber 1b is provided with the vent hole 5, when the occupant crushes the upper chamber 1b, gas in the upper chamber 1b flow out through the vent hole 5, and thus the impact of the crushing occupant is absorbed. Even when the body of the occupant crushes the lower chamber 1a, communication between the lower chamber 1a and the upper chamber 1b is blocked by the check valve 6c. In other words, when gas is trying to flow from the lower chamber 1a through the gas distributor 6 to the upper chamber 1b, the lower portion of the gas distributor 6 formed of cloth (check valve 6c) is overlapped with each other so as to close the port to prevent gas from flowing out. Consequently, the gas pressure in the lower chamber 1a is held at a high level, and thus the lateral movement of the lumber region of the occupant is prevented for a long time. This mechanism is similar to the one described with reference to Figs. 1 to 4.

In the embodiment described above, although the interior of the airbag 1 is divided into two chambers; the upper chamber 1b and the lower chamber 1a, it may also be divided into three chambers or more. Fig. 10 is a cross-sectional view showing an airbag 1A provided with a substantially lateral U-shaped seam 2A in the airbag, and thus includes a middle chamber 1c between the upper chamber 1b and the lower chamber 1a.

The front edge of the seam 2A is joined to the front edge of the airbag 1A. The seam 2A is provided with an open section 7 for communicating the upper chamber 1b and the middle chamber 1c. Other constructions of the airbag 1A are the same as the aforementioned airbag 1 shown in Fig. 5 and 6, and thus the reference numerals identical to Fig. 5 and 6 represent the identical parts in Fig. 10.

In the embodiment shown in Fig. 10, since the gas distributor 6 is provided, the gas pressure in the lower chamber 1a is maintained for a long time.

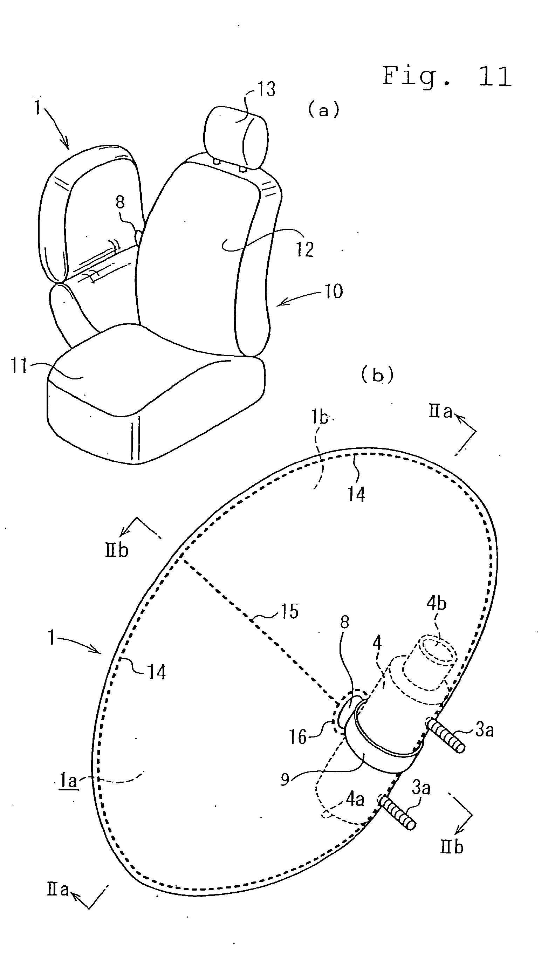

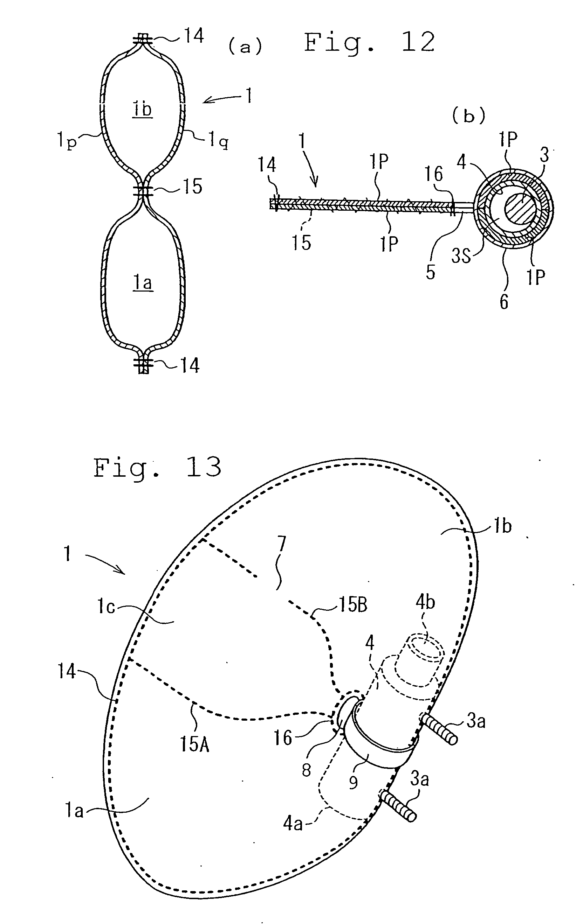

Each embodiment shown above is just an example of the present invention, and the present invention may take forms other than those shown in the drawings. For example, according to the present invention, four chambers or more may be provided. The number or the position of the check valves is not limited to the above-described embodiments. Further embodiments will now be described with reference to Figs. 11 to 14. Fig. 11(a) is a perspective view of an automobile seat having a side airbag device according to a further embodiment. Fig. 11(b) is a lateral view of an airbag in Fig. 11(a). Fig. 12(a) is a sectional view taken along line IIa-IIa of Fig. 11(b). Fig. 12(b) is a sectional view taken along line IIb-IIb of Fig. 11(b).

Referring to Fig. 11(a), a side airbag 1 is inflated along the window side of a seat 10. The seat 10 includes a seat cushion 11, a seat back 12, and a head rest 13.

A case (not shown in the drawings) for the side airbag device is provided on one side of the seat back 12. The side airbag 1 is folded and stored in the case and covered by a module cover (not shown in the drawings).

The side airbag 1 includes a pair of sheet panels 1p and 1q formed of, for example, fabric or resin sheet. The peripheries of the sheet panels 1p and 1q are stitched together with a thread to form a seam 14. The interior of the side airbag 1 is separated into a lower chamber 1a and an upper chamber 1b by a seam 15 formed of a thread as a separating mechanism.

A cylindrical gas distributor 4 is disposed along the rear inner edge of the side airbag 1 substantially in the vertical direction. The vertical direction is referred to as the cylindrical axis direction of the gas distributor 4. A cylindrical gas generator 3 is disposed in the gas distributor 4. The gas generator 3 is longitudinally disposed parallel to the cylindrical axis of the gas distributor 4. The lower end of the gas generator 3 is provided with a gas exhaust nozzle.

Two stud bolts 3a protrude from the gas generator 3. The stud bolts 3a are pierced through the rear edges of the gas distributor 4 and the side airbag 1 to protrude from the back of the side airbag 1. The stud bolts 3a and 3a are fastened to the case (not shown in the drawings) of the side airbag device by a screw nut. Thus, the gas generator 3, the gas distributor 4 and the side airbag 1 are combined together with the case.

Referring to Fig. 12(b), a space 3S for gas passage is provided between the outer surface of the gas generator 3 and the inner surface of the gas distributor 4.

A gas outlet 4a at the lower end of the cylindrical gas distributor 4 is disposed in the lower chamber 1a, and a gas outlet 4b at the upper end is disposed in the upper chamber 1b. The gas outlet 4a has a larger diameter than that of the gas outlet 4b. As shown in the drawing, the gas outlet 4a is pointed downwards while the gas outlet 4b is pointed upwards.

A hole 8 which extends through the panels 1p and 1q is provided in the vicinity of the gas distributor 4 (towards the front of the side airbag 1 from the gas distributor 4). In the periphery of the hole 8, the panels 1p and 1q are stitched together in an airtight manner with a thread to form a seam 16. The seam 16 is connected with the seam 15. The seam 15 is connected with the seam 14 at the front edge of the side airbag 1.
A clamp member 9, such as a band clamp, extends through the hole 6 to wrap around the gas distributor 4 on the exterior of the side airbag 1 so as to tightly secure the side airbag 1 to the gas distributor 4. Thus, the upper chamber 1b and the lower chamber 1a are completely separated from each other in an airtight manner in the periphery of the gas distributor 4.

In the side airbag device having the above structure, when a vehicle has a side-on collision or rolls over, gas is ejected from the gas generator 3. The gas is distributed from the gas outlets 4a and 4b of the gas distributor 4 to the lower chamber 1a and the upper chamber 1b, respectively, to inflate the chambers 1a and 1b. As shown in Fig. 1, the airbag 1 is inflated along the window side of the seat 10. In this case, the lower gas outlet 4a has a larger diameter than that of the upper gas outlet 4b so as to supply a larger amount of gas and higher gas pressure to the lower chamber 1a than to the upper chamber 1b. Furthermore, because the gas exhaust nozzle of the gas generator 3 is disposed at the lower part of the gas generator 3, a larger amount of gas as well as higher gas pressure is supplied to the lower chamber 1a. As a result, the lower chamber 1a is inflated at a higher inner pressure to keep the waist of a vehicle occupant from moving horizontally. The upper chamber 1b is inflated at a lower inner pressure than that of the lower chamber 1a to restrain the upper body of the occupant with softer impact.

In this embodiment, the gas pressure in the lower chamber 1a is maintained sufficiently high for a longer period of time since gas leakage from the lower chamber 1a to the upper chamber 1b is prevented. This is due to the seam 15 provided as the separating mechanism being connected with the seams 14 and 16, and the clamp member 9 being extended through the hole 8 to press the panels 1p and 1q of the side airbag 1 against the periphery of the gas distributor 4 in an airtight manner.

In this embodiment, gas is ejected from the gas distributor 4 in the vertical direction to rapidly inflate the side airbag 1 vertically. The side airbag 1 is then inflated in the forward direction.

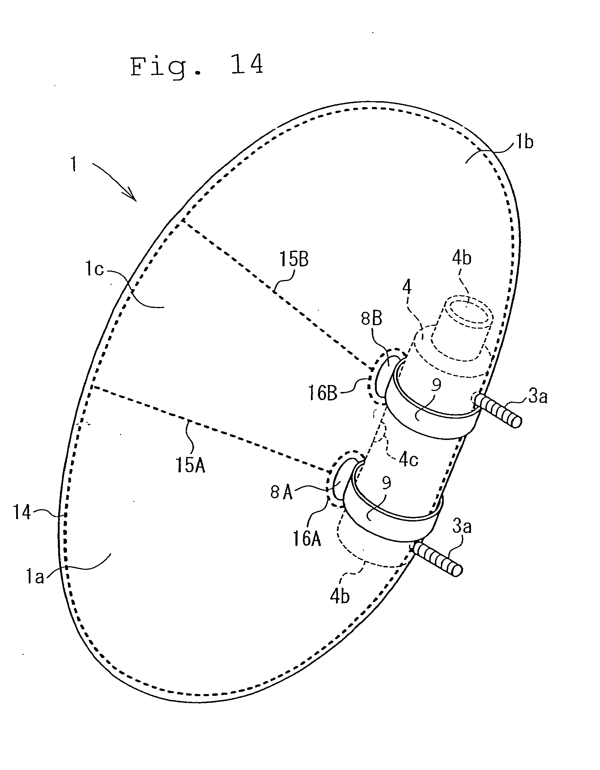

In the above embodiment, the side airbag 1 is separated into two chambers, that is, the upper chamber 1b and the lower chamber 1a. The side airbag 1 may alternatively be separated into three or more chambers. Fig. 13 and Fig. 14 illustrate embodiments each of which includes two seams 15A and 15B as the separating mechanism to provide an upper chamber 1b, a lower chamber 1a, and an inner chamber 1c.

A side airbag 1 in Fig. 13 has one hole 8. The seams 15A and 15B are each connected with a seam 16 formed in the periphery of the hole 5. The seam 15B, which separates the upper chamber 1b from the inner chamber 1c, is provided with a communicating portion 7 that links the two chambers 1b and 1c. Each of the seams 15A and 15B is connected with the seam 14 at the front edge of the side airbag 1A. Any other structure in this embodiment is similar to that of the above-mentioned embodiment, and therefore, the similar parts are indicated with the same reference numerals.

In this side airbag 1, when the gas generator 3 is in operation, the lower chamber 1a and the upper chamber 1b are inflated. The gas then flows into the inner chamber 1c through the communicating portion 7 from the upper chamber 1b.

In this side airbag 1, the lower chamber 1a is separated from the inner chamber 1c and the upper chamber 1b in an airtight manner so that high gas pressure in the lower chamber 1a is maintained for a long period of time. When the body of a vehicle occupant comes into contact with the inflated upper chamber 1b, a portion of the gas in the upper chamber 1b flows into the inner chamber 1c so as to absorb the impact from the occupant.

In the side airbag 1 of Fig. 14, two holes 8A and 8B are provided in different positions vertically along the gas distributor 4. A seam 16A in the periphery of the hole 8A is connected with the seam 15A. Likewise, a seam 16B in the periphery of the hole 8B is connected with the seam 15B. The seams 15A and 15B are each connected with the seam 14 at the front edge of the side airbag 1B. The seam 15B is not provided with a communicating portion.

A gas outlet 4c is provided between the holes 8A and 8B on the gas distributor 4 for distributing gas into the inner chamber 1c.

Any other structure in this side airbag 1 is similar to that of the side airbag 1, and therefore, the similar parts are indicated with the same reference numerals.

In this embodiment, when the gas generator 3 is in operation, the lower chamber 1a, the inner chamber 1c, and the upper chamber 1b are inflated. The lower chamber 1a is inflated the quickest of the three and is also inflated with the highest inner pressure. The lower chamber 1a is separated from the inner chamber 1c and the upper chamber 1b in an airtight manner so that high inner pressure in the lower chamber 1a is satisfactorily maintained for a long period of time.

Gas is directly supplied to the inner chamber 1c from the gas distributor 4 and is ejected forward from the outlet 4c provided on the cylindrical surface of the gas distributor 4 so as to quickly inflate the inner chamber 1c in the forward direction.

Other than the above-mentioned embodiments, the present invention may have alternative embodiments not shown in the drawings. For example, three or more separating seams may be provided to form four or more chambers.

### [Advantages]

As described above, the present invention maintains higher pressure for a longer period of time in an inflated lower chamber separately formed in the lower part of an airbag.

## Claims

1. An airbag apparatus for side collision comprising:
an airbag (1; 1A) including an occupant-side surface (1p) which faces an occupant when deployed, and a vehicle-body-side surface (1q) which is on the opposite side therefrom, and having an interior divided into a plurality of chambers (1a, 1b, 1c) including at least an upper chamber (1b) and a lower chamber (1a);
a gas generator (3) for deploying the airbag (1; 1A); and
communicating means (6) for communicating the upper chamber (1b) and the lower chamber (1a),
**characterized in that** gas flow preventing means (6c, 9) for preventing gas from flowing from the lower chamber (1a) to the upper chamber (1b) are provided.

2. An airbag apparatus for side collision according to claim 1,
**characterized in that** the occupant-side surface and the vehicle-body-side surface are joined, the plurality of chambers are defined in the airbag by a linearly extending partitioning joint line (2, 2a),
the communicating means comprise a communicating portion formed in the airbag by a part of the partitioning joint line (2, 2a) being positioned away from one side edge of the airbag (1;1A), and
part of the gas flow preventing means (6c; 9) are joined to the occupant-side surface and the vehicle-body-side surface by the partitioning joint line (2, 2a).

3. An airbag apparatus for side collision according to claim 1 or claim 2,
**characterized in that** the gas flow preventing means (6c; 9) comprise a check valve (6c).

4. An airbag apparatus for side collision according to any one of the preceding claims,
**characterized in that** the airbag apparatus comprises a gas distributor (4; 6) enclosing the gas generator (3) and including outlet ports (4a, 4b) for allowing gas from the gas generator (3) at least to the upper chamber (1b) and the lower chamber (1a),
wherein the outlet port (4a) for the lower chamber (1a) of the gas distributor (4; 6) is larger than the outlet port (4b) for the upper chamber (1b) thereof.

5. An airbag apparatus for side collision according to claim 4,
**characterized in that**
the communicating means comprise the gas distributor (6).

6. An airbag apparatus for side collision according to claim 4 or 5, wherein the gas distributor (6) includes a sheet for wrapping the gas generator (3), the outlet port for the lower chamber (1a) of the gas distributor (6) extends toward the lower chamber (1a) side with respect to the gas generator (3), and the extended portion constitutes the gas flow preventing means (6c).

7. An airbag apparatus for side collision according to claim 6, **characterized in that** the sheet is rolled in a cylindrical shape, the one edge and the other edge of the sheet are superimposed, and a mounting member (17c) of the gas generator (3) is passed through the superimposed edges.

8. An airbag apparatus for side collision according to any one of claims 4 to 7, **characterized in that** a vent unit (5) for allowing gas to flow from the upper chamber (1b) to the outside of the airbag (1; 1A) is provided.

9. An airbag apparatus according to any one of claims 4 to 8,
**characterized in that** the interior of the airbag (1; 1A) is separated into the plurality of chambers including the upper chamber (1b) and the lower chamber (1a) by at least one separating mechanism (15; 15A; 15B);
that the gas generator (3) is cylindrical and
the gas distributor (4) is cylindrical and is disposed in the airbag (1),
wherein the airbag (1) has a hole (8) in the vicinity of the gas distributor (4),
wherein the periphery of the hole (8) is hermetically sealed by a sealing mechanism (16),
wherein the sealing mechanism (16) is connected with at least one of the separating mechanism (15; 15A), and
wherein the gas flow preventing means comprise a clamp member (9),
wherein the airbag (1) is pressed against the periphery of the gas distributor (4) by the clamp member (9) which extends through the hole (8) and around the gas distributor (4) on the exterior of the airbag (1).

10. The airbag apparatus according to claim 9, wherein the airbag comprises at least one inner chamber (1c) between the upper chamber (1b) and the lower chamber (1a).

11. The airbag apparatus according to claim 10, wherein the gas distributor (4) comprises a gas outlet (4c) for supplying gas to the inner chamber (1c).

12. The airbag apparatus according to claim 11, wherein the airbag (1) has a plurality of the holes (8A, 8B), each of the holes (8A, 8B) being connected with a plurality of the separating mechanism (16A, 16B), the separating mechanism (16A, 16B) having the inner chamber (1c) therebetween, and
wherein the gas outlet (4c) for the inner chamber (1c) on the gas distributor (4) is provided between the separating mechanism (16A, 16B).

13. The airbag apparatus according to claim 10, wherein the airbag further has a communicating port (7) for linking the upper chamber (1b) with the inner chamber (1c), and
wherein the communicating port (7) introduces gas to the inner chamber (1c) from the gas generator (3) via the upper chamber (1b).

14. The airbag device according to claim 13, wherein a plurality of the separating mechanism (15A, 15B) is commonly connected with the hole (8), and
wherein the inner chamber (1c) is provided between the separating mechanism (15A, 15B).
